# EUROPÄISCHE PATENTANMELDUNG

(11) **EP 1 234 647 A1**
(43) Veröffentlichungstag der Anmeldung: **28.08.2002**
(21) Anmeldenummer: 01810190.7
(22) Anmeldetag: 23.02.2001
(51) Int. Cl.: B29C 33/52, B29L 22/00

(54) **Verfahren zur Herstellung von Modellen mittels eines wasserlöslichen Kerns**

(71) Anmelder: Vantico AG, 4057 Basel (CH)
(72) Erfinder: Die Erfindernennung liegt noch nicht vor
(74) Vertreter: Hedley, Nicholas James Matthew

(57) **Zusammenfassung**

Die Erfindung betrifft ein Verfahren zur Herstellung von Modellen oder Vorformlingen umfassend die folgenden Verfahrensschritte:
(a) Herstellung eines geformten Kerns aus einem wasserlöslichen Blockmaterial,
(b) Beschichtung des geformten Kerns mit einem härtbaren Polymer,
(c) Härtung des härtbaren Polymers bei 25 - 250 °C, und
(d) Entfernung des Kernmaterials durch Behandlung des beschichteten Kerns mit Wasser.

## Beschreibung

Die vorliegende Erfindung betrifft ein Verfahren zur Herstellung von Modellen oder Vorformlingen nach der "lost core"-Methode.

Ein übliches Verfahren zur Herstellung von Kunststoff-Modellen von komplexen Formkörpern mit Hohlräumen erfordert die Modellierung eines Negativ-Prototyps aus einem Blockmaterial, welcher anschließend mit einem härtbaren Polymer beschichtet wird. Nach Aushärtung des Polymers wird das innere Blockmaterial entfernt ("lost core"). Die geschieht, je nach Art des verwendeten Blockmaterials und des gehärteten Polymers durch Schmelzen oder durch Lösen in einem geeigneten Lösungsmittel. Als Blockmaterialien werden bisher Wachs, Polystyrol oder andere schmelzbare Kunstoffmischungen eingesetzt.
In SAMPE Journal, Vol. 36, No. 4, 46-48 (2000) wird ein Polyisocyanurat-Schaum zur Herstellung von Motorengehäusen vorgeschlagen. Der Polyisocyanurat-Schaum ist leicht verarbeitbar, temperaturbeständig bis 180 °C und kompatibel mit verschiedenen Kunstharzen, wie Epoxiden, Bismaleinimiden und Phenolharzen. Die Entfernung des Blockmaterials erfolgt mit Hilfe von Hochdruck-Waschanlagen.

Aufgabe der vorliegenden Erfindung war es, die bekannten Verfahren zu vereinfachen und die Menge an Abfallstoffen zu reduzieren.

Gegenstand der vorliegenden Erfindung ist ein Verfahren zur Herstellung von Modellen oder Vorformlingen umfassend die folgenden Verfahrensschritte:
(a) Herstellung eines geformten Kerns aus einem wasserlöslichen Blockmaterial,
(b) Beschichtung des geformten Kerns mit einem härtbaren Polymer,
(c) Härtung des härtbaren Polymers bei 25 - 250 °C, und
(d) Entfernung des Kernmaterials durch Behandlung des beschichteten Kerns mit Wasser.

Die Umweltbelastung durch das erfindungsgemäße Verfahren ist minimal, da keine organischen Lösungsmittel verwendet werden und das wasserlösliche Blockmaterial zurückgewonnen und wiederverwertet werden kann.

Die Herstellung des geformten Kerns im Verfahrensschritt (a) erfolgt nach bekannten Formverfahren, wie zum Beispiel Fräsen, Schleifen, Gießen oder Pressen in eine Form.

Das wasserlösliche Blockmaterial sollte gut formbar sein und eine gewisse Temperaturbeständigkeit aufweisen.
Bevorzugte Blockmaterialien sind wasserlösliche Polymere, wie beispielsweise Polyacrylsäure, Polymethacrylsäure und insbesondere Polyvinylalkohol.

Es ist zweckmäßig, auf den geformten Kern vor der Beschichtung mit dem härtbaren Polymer ein Trennmittel aufzubringen. Geeignete Trennmittel sind beispielsweise Fettsäuren, Fettsäureester, Fettsäuresalze, wie zum Beispiel Zink- oder Calciumstearat, und Silicone. Anstatt mit einem Trennmittel zu beschichten, kann man den geformten Kern auch mit einem Teflon-Band umwickeln.

Das im Verfahrensschritt (b) verwendete Polymer kann ein thermisch härtbares oder strahlungshärtbares Polymer sein. Vorzugsweise wird ein thermisch härtbares Polymer (Duroplast) eingesetzt.

Geeignete härtbare Polymere sind beispielsweise Epoxidharze, Phenolharze, ungesättigte Polyester, Bismaleinimide, Polyimide und Polyurethane.

Besonders bevorzugt sind Epoxidharze.

Beispiele für geeignete Epoxidharze sind Diglycidylether von Bisphenolen, wie z.B. Bisphenol A-diglycidylether und Bisphenol F-diglycidylether, Epoxyphenolnovolake, Epoxykresolnovolake, cycloaliphatische Epoxidharze, wie beispielsweise 3,4-Epoxycyclohexylmethyl-3',4'-epoxycyclohexancarboxylat, Tetrahydrophthalsäurediglycidylester, 4-Methyltetrahydrophthalsäure diglycidylester, Hexahydrophthalsäurediglycidylester und 4-Methylhexahydrophthalsäurediglycidylester sowie N-Glycidylverbindungen wie Triglycidylisocyanurat.

Das härtbare Polymer kann übliche Hilfs- und Zusatzstoffe enthalten, wie zum Beispiel Antioxidantien, Lichtschutzmittel, Flammschutzmittel, Füllstoffe, Weichmacher, Farbstoffe, Pigmente, Thixotropiemittel, Zähigkeitsverbesserer, Entschäumer, Antistatika, Gleitmittel und Entformungshilfsmittel.

Vorzugsweise enthält das härtbare Polymer pulverförmige Füllstoffe, wie Quarzmehl oder Aluminiumoxid.

Die Beschichtung der geformten Kerns mit dem härtbaren Polymer erfolgt im allgemeinen mit herkömmlichen Methoden, wie zum Beispiel Aufspritzen, Aufsprühen, Umgießen, der Fadenwickeltechnik ("filament winding") oder dem Handauflegeverfahren,.

Das härtbare Polymer wird anschließend bei Raumtemperatur oder erhöhter Temperatur ausgehärtet. Härtungstemperatur und Härtungsdauer hängen dabei sowohl von der Art des härtbaren Polymers als auch von der Wahl des Härters bzw. Beschleunigers ab. Geeignete Härter und Härtungsbeschleuniger sind dem Fachmann wohlbekannt
Vorzugsweise wird ein Harz/Härter-System gewählt, welches im Temperaturbereich von 50 - 150 °C, insbesondere von 80 - 140 °C, aushärtet.

Der Härtungsprozess kann in einem Ofen unter Normaldruck oder in einem Autoklaven bei Überdruck durchgeführt werden.

Nach der Härtung des Polymers kann der geformte Kern auf sehr einfache Weise durch Auflösen in Wasser entfernt werden. Am einfachsten geschieht dies durch Eintauchen des beschichteten Kerns in ein Wasserbad.
Bei sehr gut löslichen Blockmaterialien, wie zum Beispiel Polyvinylalkohol, genügt bereits die Verwendung von kaltem Wasser; schwerer lösliche Materialien können unter Verwendung von warmem bis heißem Wasser oder unter Anwendung von Überdruck entfernt werden.

Vorzugsweise wird der Verfahrensschritt (d) bei Raumtemperatur (15 - 25 °C) und unter Normaldruck (900 -1100 hPa) durchgeführt.

Der gegebenenfalls im Blockmaterial enthaltene Füllstoff kann nach Durchführung des Verfahrensschritts (d) wiedergewonnen und der gleichen oder auch einer anderen Verwendung zugeführt werden.

Auch das wasserlösliche Blockmaterial kann durch Abdampfen des Wassers vollständig wiedergewonnen werden.

### Beispiel 1

Eine Mischung aus 10 Gew.-Teilen Polyvinylalkohol und 100 Gew.-Teilen Al₂O₃ · 3H₂O wird zu einem Negativ-Modell eines Hohlkörpers geformt. Anschließend wird ein Epoxidharz/Härter-Gemisch (Bisphenol A-diglycidylether) auf das Negativ-Modell aufgebracht. Eine Trennmittelvorbehandlung ist nicht erforderlich. Die Aushärtungszeit richtet sich nach der Schichtstärke des Blockes; pro 1 cm Schichtstärke ist eine Härtung für 1 h bei mindestens 60 °C erforderlich. Nach der Aushärtung wird das Blockmaterial aus dem Inneren des Hohlkörpers in Wasser aufgelöst.

### Beispiel 2

Eine Mischung aus 20 Gew.-Teilen Polyvinylalkohol und 100 Gew.-Teilen ALU DIN 100 (Aluminiumpulver, 100 µm) wird zu einem Negativ-Modell eines Hohlkörpers geformt. Anschließend wird ein Epoxidharz/Härter-Gemisch (Bisphenol A-diglycidylether) auf das Negativ-Modell aufgebracht. Eine Trennmittelvorbehandlung ist nicht erforderlich. Die Aushärtungszeit richtet sich nach der Schichtstärke des Blockes; pro 1 cm Schichtstärke ist eine Härtung für 1 h bei mindestens 60 °C erforderlich. Nach der Aushärtung wird das Blockmaterial aus dem Inneren des Hohlkörpers in Wasser aufgelöst.

## Patentansprüche

1. Verfahren zur Herstellung von Modellen oder Vorformlingen umfassend die folgenden Verfahrensschritte:
(a) Herstellung eines geformten Kerns aus einem wasserlöslichen Blockmaterial,
(b) Beschichtung des geformten Kerns mit einem härtbaren Polymer,
(c) Härtung des härtbaren Polymers bei 25 - 250 °C, und
(d) Entfernung des Kernmaterials durch Behandlung des beschichteten Kerns mit Wasser.

2. Verfahren nach Anspruch 1, **dadurch gekennzeichnet, dass** im Verfahrensschritt (a) ein wasserlösliches Polymer als Blockmaterial eingesetzt wird.

3. Verfahren nach Anspruch 2, **dadurch gekennzeichnet, dass** im Verfahrensschritt (a) Polyvinylalkohol als Blockmaterial eingesetzt wird.

4. Verfahren nach Anspruch 1, **dadurch gekennzeichnet, dass** das härtbare Polymer im Verfahrensschritt (b) ausgewählt ist aus Epoxidharzen, Phenolharzen, ungesättigten Polyestern, Bismaleinimiden, Polyimiden und Polyurethanen.

5. Verfahren nach Anspruch 1, **dadurch gekennzeichnet, dass** die Härtung des härtbaren Polymers im Verfahrensschritt (c) bei 50 - 150 °C durchgeführt wird.

6. Verfahren nach Anspruch 1, **dadurch gekennzeichnet, dass** der Verfahrensschritt (d) bei Raumtemperatur (15 - 25 °C) und unter Normaldruck (900 -1100 hPa) durchgeführt wird.
